# EUROPÄISCHE PATENTSCHRIFT

(11) **EP 0 531 967 B1**
(45) Veröffentlichungstag und Bekanntmachung des Hinweises auf die Patenterteilung: **09.08.1995**
(21) Anmeldenummer: 92115417.5
(22) Anmeldetag: 09.09.1992
(51) Int. Cl.: B29C 47/10, B29C 47/54, B29K 105/06

(54) **Vorrichtung zum Plastifizieren von mit Langfasern verstärktem thermoplastischem Kunststoffgranulat**
Plasticising device for long fiber reinforced plastic pellets
Dispositif pour la plastification des granulés en matière plastique renforcée à fibre longue

(30) Priorität: 10.09.1991 DE 4129967
(43) Veröffentlichungstag der Anmeldung: 17.03.1993
(73) Patentinhaber: HOECHST AKTIENGESELLSCHAFT, 65926 Frankfurt am Main (DE)
(72) Erfinder: Henning, Jürgen, W-6200 Wiesbaden (DE); Maschkowski, Peter, W-3410 Northeim (DE)

(56) Entgegenhaltungen:
- FR-A- 2 174 786
- PATENT ABSTRACTS OF JAPAN vol. 12, no. 206 (M-708)(3053) 14. Juni 1988 & JP-A-63 009 511 (NIPPON KOKAN K.K.) 16. Januar 1988
- PATENT ABSTRACTS OF JAPAN vol. 12, no. 61 (M-671)(2908) 24. Februar 1988 & JP-A-62 208 922 (NIPPON KOKAN K.K.) 14. September 1987

## Beschreibung

Die Erfindung betrifft eine Vorrichtung zum Plastifizieren von mit Langfasern verstärktem thermoplastischem Kunststoffgranulat.

Die Anwendungsmöglichkeiten thermoplastischer Kunststoffe lassen sich durch Einarbeiten von Verstärkungsfasern erweitern. Durch Zusatz langer Fasern (Faserlänge >4 mm) können alle mechanischen Kennwerte thermoplastischer Kunststoffe deutlich verbessert werden. Während das Herstellen von Kunststoffgranulat mit Langfaserzusatz weitgehend gelöst ist, bereitet das Plastifizieren eines solchen Granulats nach wie vor Schwierigkeiten, da die Faser bei Verwendung der bekannten Plastifiziereinrichtungen geschädigt wird. So werden die Fasern bereits beim Einzug des Granulats in den Extruder aufgrund der Fließwegumlenkung mechanisch zerkleinert. Hierzu addiert sich die Zerkleinerung der Fasern durch ihre Friktion mit den metallischen Teilen auf dem Fließweg des Granulats in der Plastifiziereinheit. Hier will die Erfindung Abhilfe schaffen.

Die Aufgabe wird durch eine Vorrichtung der eingangs genannten Art gelöst, die dadurch gekennzeichnet ist, daß in einem Trog zwei randgängige Knetorgane angeordnet sind, im Boden des Troges eine Rinne zur Aufnahme eines in der Rinne verschiebbaren Räumkolbens vorgesehen ist und an einer Stirnseite der Rinne ein Ausstoßzylinder befestigt ist, in den sich der Räumkolben einschieben läßt.

Der Trog, die Knetorgane, der Räumkolben und der Ausstoßzylinder können mit Temperiereinrichtungen versehen sein.

Die Vorrichtung bietet im wesentlichen den Vorteil, daß das faserverstärkte Kunststoffgranulat von 10 bis 100 mm Länge und einer Dicke von 0,1 bis 50 mm mit Fasern von 10 bis 100 mm Länge und einer Dicke von 5 bis 30 »m schonend, d.h. ohne mechanische Zerkleinerung in den Plastifizierteil der Vorrichtung und von dort ohne nennenswerte Scherbeanspruchung in den Ausstoßzylinder gelangt.

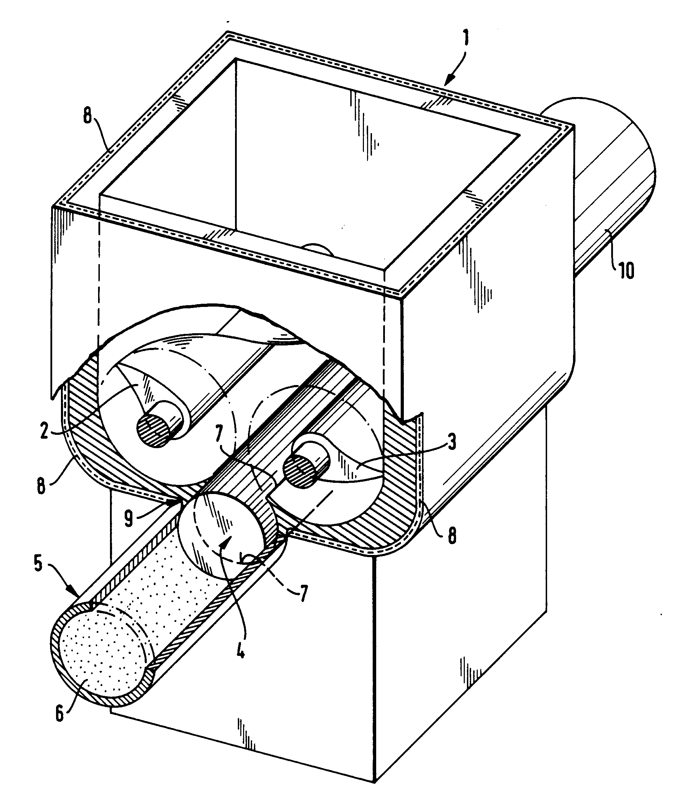

Im folgenden wird die Erfindung anhand der Figur näher erläutert, die die Vorrichtung perspektivisch, teilweise geschnitten zeigt.

In einem Trog 1 sind zwei randgängige Knetorgane 2, 3 angeordnet. Im Boden des Troges 1 ist eine Rinne 7 vorgesehen, in der ein Räumkolben 4 angeordnet ist. An der Stirnseite 9 der Rinne 7 ist ein Ausstoßzylinder 5 befestigt, in den sich der Kolben 4 einschieben läßt. Der Trog 1 kann mit Temperiereinrichtungen 8 (Heiz- und/oder Kühleinrichtungen) versehen sein, ebenso die Knetorgane 2,3, der Räumkolben 4 und der Ausstoßzylinder 5 (nicht dargestellt). Die Öffnung 6 des Ausstoßzylinders 5 kann mit einer nicht dargestellten Klappe oder mit dem Verarbeitungs- bzw. Formgebungswerkzeug verschlossen werden. Mit 10 ist eine Antriebseinrichtung für den Ausstoßzylinder 5 bezeichnet.

## Patentansprüche

1. Vorrichtung zum Plastifizieren von mit Langfasern verstärktem thermoplastischem Kunststoffgranulat, dadurch gekennzeichnet, daß in einem Trog (1) zwei randgängige Knetorgane (2, 3) angeordnet sind, im Boden des Trogs (1) eine Rinne (7) zur Aufnahme eines in der Rinne (7) verschiebbaren Räumkolbens (4) vorgesehen ist und an einer Stirnseite (9) der Rinne (7) ein Ausstoßzylinder (5) befestigt ist, in den sich der Räumkolben (4) einschieben läßt.

2. Vorrichtung nach Anspruch 1, dadurch gekennzeichnet, daß der Trog (1) mit Temperiereinrichtungen (8) versehen ist.

3. Vorrichtung nach Anspruch 1, dadurch gekennzeichnet, daß die Knetorgane (2, 3) mit Temperiereinrichtungen versehen sind.

4. Vorrichtung nach Anspruch 1, dadurch gekennzeichnet, daß der Räumkolben (4) und der Ausstoßzylinder (5) Temperiereinrichtungen aufweisen.

## Claims

1. A device for the plastication of thermoplastics granules reinforced with long fibers, wherein two kneading elements (2, 3) with low edge clearance are disposed in a trough (1), a channel (7) is provided in the base of the trough (1) to accommodate an evacuating ram (4), which can be displaced within the channel (7), and a discharge cylinder (5) is attached on one front side (9) of the channel (7), into which cylinder the evacuating ram (4) can be inserted.

2. The device as claimed in claim 1, wherein the trough (1) is provided with temperature control means (8).

3. The device as claimed in claim 1, wherein the kneading elements (2, 3) are provided with temperature control means.

4. The device as claimed in claim 1, wherein the evacuating ram (4) and the discharge cylinder (5) are provided with temperature control means.

## Revendications

1. Machine pour plastifier un granulé de résine synthétique thermoplastique renforcée de fibres longues, caractérisé en ce que, dans une auge (1) sont agencés deux organes malaxeurs racleurs (2, 3), dans le fond de l'auge (1), est prévu un canal (7) destiné à recevoir un piston pousseur (4) qui peut coulisser dans le canal (7) et à un côté frontal (9) du canal (7), est fixé un cylindre d'éjection (5) dans lequel le piston pousseur (4) peut s'enfoncer.

2. Machine selon la revendication 1, caractérisée en ce que l'auge (1) est munie de dispositifs de mise en température (8).

3. Machine selon la revendication 1, caractérisée en ce que les organes malaxeurs (2, 3) sont munis de dispositifs de mise en température.

4. Machine selon la revendication 1, caractérisée en ce que le piston pousseur (4) et le cylindre d'éjection (5) présentent des dispositifs de mise en température.
